# EUROPEAN PATENT APPLICATION

(11) **EP 2 104 371 A1**
(43) Date of publication of application: **23.09.2009**
(21) Application number: 08706551.2
(22) Date of filing: 24.01.2008
(51) Int. Cl.: H04Q 7/38

(54) **METHOD AND SYSTEM FOR REGULATING RADIO RESOURCE OF TERMINAL**

(30) Priority: 29.01.2007 CN 200710006081
(71) Applicant: Huawei Technologies Co., Ltd., Shenzhen, Guangdong Province 518129 (CN)
(72) Inventor: TAN, Bin, Guangdong 518129 (CN); GENG, Fenghua, Guangdong 518129 (CN)
(74) Representative: Charles, Glyndwr
(86) International application number: PCT/CN2008/070174
(87) International publication number: WO 2008/092399

(57) **Abstract**

A method, apparatus and terminal device for regulating radio resources of a terminal are disclosed. The method includes: transmitting "regulating radio resources of the terminal on the basis of a current radio resource of the terminal" parameter information to the terminal; after receiving the parameter information, by the terminal, determining the current radio resource, and regulating radio resources on the basis of the current radio resource according to the parameter information. The regulating of radio resource of the terminal on the basis of the current radio resource of the terminal includes: maintaining the current radio resource and adding a radio resource; or maintaining a part of the current radio resource and releasing a remaining part of the current radio resource. The parameter information may be carried in a single-carrier assignment branch or dual-carrier assignment branch of a downlink assignment message and transmitted to the terminal. The embodiments of the present invention enhance the flexibility of regulating radio resources of the terminal.

## Description

### Field of the Invention

The present invention relates to network communication technologies, and in particular, to a method and apparatus for regulating radio resources of a terminal.

### Background of the Invention

Enhanced Data rates for GSM Evolution, EDGE, is a data-enhanced mobile communication technology based on Global System for Mobile communications, GSM or General Packet Radio Service, GPRS, networks. The EDGE is also known as a 2.75G technology. The EDGE technology is applicable to broadband services, and enables the networks based on the 800 MHz, 900 MHz, 1800 MHz and 1900 MHz band to provide partial functions of a 3^{rd} Generation, 3G, mobile communication network.

To meet the requirements of multimedia services and further improve the data transmission rate of an EDGE system, a brand-new technical solution - downlink dual-carrier or multi-carrier transmission technology - is proposed currently. In a traditional EDGE system, a terminal, also referred to as a Mobile Station, MS, receives downlink data through only one carrier, with the working bandwidth being only 200 KHz and the maximum theoretic data transmission rate being 473.6 Kbps. The downlink dual-carrier or multi-carrier transmission technology enables the terminal in the EDGE system to receive downlink data on multiple carriers concurrently, with the working bandwidth being 200 × N KHz, where N is the number of carriers. Moreover, the maximum data transmission rate is in proportion to the number of carriers. The downlink dual-carrier or multi-carrier transmission technology prolongs the lifecycle of the GSM greatly, and is rather promising.

After the downlink dual-carrier or multi-carrier transmission technology is introduced, the Base Station Subsystem, BSS, may regulate the radio resources of the terminal according to the usage of the radio resources. In the prior art, the method for regulating radio resources of the terminal is: assigning a new radio resource to the terminal to completely replace the current radio resource of the terminal.

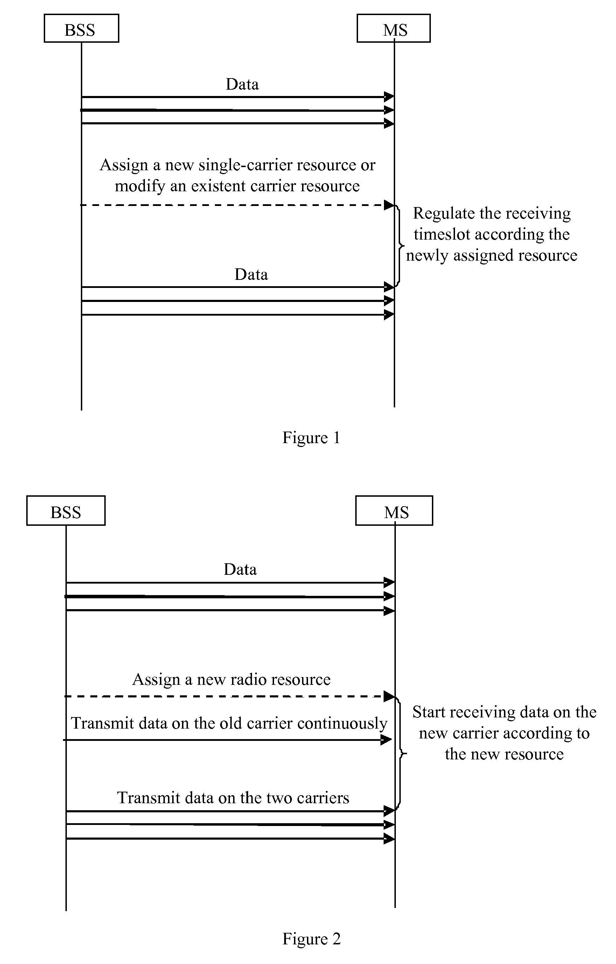

The method for regulating the radio resource is described below with reference to Figure 1, showing that a downlink dual-carrier radio resource replaces the current downlink single-carrier radio resource.

As shown in Figure 1, in step 1: The BSS assigns a downlink dual-carrier radio resource to the terminal, and allocates a Temporary Block Flow, TBF, to the terminal. The terminal enters the downlink dual-carrier transmission state. In the downlink dual-carrier transmission process of the terminal, if the BSS needs to regulate the radio resource of the terminal to a single-carrier radio resource according to the conditions such as idleness of the radio resource, the process proceeds to step 2.

Step 2: Through a control message such as a packet downlink assignment message, the BSS instructs the terminal to regulate the radio resource to the single-carrier radio resource. The terminal releases the current dual-carrier radio resource, and sets the radio resource parameters according to the received assignment message. The downlink dual-carrier radio resource of the terminal is replaced by the single-carrier radio resource.

Step 3: According to the new single-carrier radio resource, the terminal receives downlink data.

As described above, in the process of regulating radio resources of the terminal, the terminal can only release the current resource, that is, the newly assigned radio resource replaces the current radio resource. The method for regulating radio resources of the terminal is unitary and inflexible.

### Summary of the Invention

Embodiments of the present invention provide a method and apparatus for regulating radio resources of a terminal and a terminal device so that the flexibility of regulating radio resources of the terminal is enhanced.

A method for regulating radio resources of a terminal in an embodiment of the present invention includes:
transmitting "regulating radio resources of the terminal on the basis of a current radio resource of the terminal" parameter information to the terminal; and
by the terminal, determining the current radio resource after receiving the parameter information, and regulating radio resources on the basis of the current radio resource according to the parameter information; wherein
the regulating of radio resources on the basis of the current radio resource includes: maintaining the current radio resource and adding a radio resource; or maintaining a part of the current radio resource and releasing a remaining part of the current radio resource.

Another method for regulating radio resources of a terminal in an embodiment of the present invention includes:
carrying an "adding a radio resource on the basis of a current radio resource of the terminal" indication in an "Assignment Type" message field of a single-carrier assignment branch of a downlink assignment message, and transmitting the downlink assignment message to the terminal; and
by the terminal, determining the current radio resource if the "Assignment Type" message field of the downlink assignment message received by the terminal carries the indication, and adding a radio resource on the basis of the current radio resource according to the downlink assignment message.

Another method for regulating radio resources of a terminal in an embodiment of the present invention includes:
transmitting a downlink assignment message to the terminal, wherein the message indicates that a dual-carrier assignment branch carries a timeslot allocation unit; and
by the terminal, determining a current radio resource if the dual-carrier assignment branch in the downlink assignment message received by the terminal carries a timeslot allocation unit, and adding a radio resource on the basis of the current radio resource according to the downlink assignment message.

Another method for regulating radio resources of a terminal is provided in an embodiment of present invention, where: if a current radio resource of the terminal is a single-carrier radio resource, the carrier ID of the radio resource on the terminal is "carrier n" by default, n including 1. The method includes:
transmitting a downlink assignment message to the terminal, wherein the message indicates that a single-carrier assignment branch carries a indication for modifying ID; and
adding, by the terminal, a radio resource on the basis of the current radio resource according to the downlink assignment message if the single-carrier assignment branch in the downlink assignment message received by the terminal carries an indication for modifying ID and the carrier ID carried in the single-carrier assignment branch is different from the default carrier ID.

Another method for regulating radio resources of a terminal in an embodiment of the present invention includes:
receiving, by the terminal, "regulating radio resources of the terminal on the basis of a current radio resource of the terminal" parameter information from a network; and
by the terminal, determining the current radio resource after receiving the parameter information, and regulating radio resources on the basis of the current radio resource according to the parameter information;
the regulating of radio resources on the basis of the current radio resource includes: maintaining the current radio resource and adding a radio resource; or maintaining a part of the current radio resource and releasing a remaining part of the current radio resource.

Another method for regulating radio resources of a terminal is provided in an embodiment of present invention, where: if a current radio resource of the terminal is a single-carrier radio resource, the carrier ID of the radio resource on the terminal is "carrier n" by default, n including 1. The method includes:
receiving, by the terminal, a downlink assignment message from a network; and
adding, by the terminal, a radio resource on the basis of the current radio resource according to the downlink assignment message if a single-carrier assignment branch in the downlink assignment message received by the terminal carries a indication for modifying ID and the carrier ID carried in the single-carrier assignment branch is different from the default carrier ID.

An apparatus for regulating radio resources of a terminal in an embodiment of the present invention includes:
a parameter information setting module, adapted to set "adding or removing radio resources of the terminal on the basis of a current radio resource of the terminal" parameter information when the radio resources of the terminal need to be regulated on the basis of the current radio resource of the terminal; and
a sending module, adapted to send the parameter information set by the parameter information setting module to the terminal.

A terminal device provided in an embodiment of the present invention includes:
a judging module, adapted to send a notification to a regulating module after determining that the terminal receives "adding or removing radio resources of the terminal on the basis of a current radio resource of the terminal" parameter information; and
the regulating module, adapted to: determine the current radio resource of the terminal after receiving the notification, and add or remove radio resources of the terminal on the basis of the current radio resource according to the received parameter information.

As described above, a new technical solution to regulating terminal resources is provided in embodiments of the present invention. With the solution, the network can regulate the radio resources of the terminal on the basis of the current radio resource of the terminal, thus reducing the extent of changing radio resources of the terminal and improving the flexibility of regulating radio resources of the terminal.

### Brief Description of the Drawings

Figure 1 is a flowchart of a method for regulating radio resources of a terminal in the prior art; and

Figure 2 is a flowchart of a method for regulating radio resources of a terminal in an embodiment of the present invention.

### Detailed Description of the Invention

When the network regulates the radio resources of a terminal, if the radio resources can be regulated on the basis of the current radio resource of the terminal, for example a single-carrier radio resource is added on the basis of the current single-carrier radio resource of the terminal to change the current single-carrier radio resource to a dual-carrier radio resource, the network no longer needs to regulate the radio resources of the terminal in a unitary replacement mode, thus enriching the modes of the network regulating radio resources of the terminal and improving the flexibility of regulating radio resources of the terminal.

In an embodiment of the present invention, the scenarios of regulating radio resources of the terminal on the basis of the current radio resource of the terminal include:

Scenario 1: On the basis of the current single-carrier radio resource of the terminal, adding a single-carrier radio resource or multi-carrier radio resource so that the current single-carrier radio resource of the terminal changes to a dual-carrier or multi-carrier radio resource;

Scenario 2: On the basis of the current dual-carrier radio resource of the terminal, adding a single-carrier radio resource or multi-carrier radio resource so that the current dual-carrier radio resource of the terminal changes to a multi-carrier radio resource;

Scenario 3: On the basis of the current multi-carrier radio resource of the terminal, adding a single-carrier radio resource or multi-carrier radio resource so that the current multi-carrier radio resource of the terminal changes to a multi-carrier radio resource with more radio resources;

Scenario 4: On the basis of the current dual-carrier radio resource of the terminal, removing a single-carrier radio resource so that the current dual-carrier radio resource of the terminal changes to a single-carrier radio resource;

Scenario 5: On the basis of the current multi-carrier radio resource of the terminal, removing a single-carrier radio resource or multi-carrier radio resource so that the current multi-carrier radio resource of the terminal changes to a single-carrier radio resource, a dual-carrier radio resource, or a multi-carrier radio resource with fewer radio resources; and

Scenario 6: On the basis of the current radio resource of the terminal, modifying the parameter configuration information of a single-carrier radio resource or dual-carrier radio resource so that only the configuration parameters instead of the quantity of the current radio resource of the terminal are changed.

In an embodiment of the present invention, the network such as the BSS needs to send "regulating radio resources of the terminal on the basis of a current radio resource of the terminal" parameter information to the terminal when the current radio resource of the terminal needs to be regulated. The parameter information may be delivered to the terminal through a single-carrier assignment branch or dual-carrier assignment branch of a downlink assignment message, or through other downlink messages.

In an embodiment of the present invention, the network delivers "regulating radio resources of the terminal on the basis of a current radio resource of the terminal" parameter information in one of the following modes:

Mode 1: If the network needs to add a radio resource of the terminal and the parameter information is delivered through the single-carrier assignment branch of a downlink assignment message, the parameter information may include: an "adding a radio resource on the basis of a current radio resource of the terminal" indication, TBF information, and carrier information. When the terminal receives the downlink data through only one TBF, the TBF information is omissible. In this case, the carrier is added to the current TBF of the terminal by default.

Mode 2: If the network needs to remove a radio resource of the terminal and the parameter information is delivered through the single-carrier assignment branch of a downlink assignment message, the parameter information may include: a "removing a radio resource on the basis of a current radio resource of the terminal" indication, TBF information, and carrier information. When the terminal receives the downlink data through only one TBF, the TBF information is omissible. In this case, the carrier is removed from the current TBF of the terminal by default.

Mode 3: If the network needs to modify a radio resource of the terminal and the parameter information is delivered through the single-carrier assignment branch of a downlink assignment message, the parameter information may include: a "modifying a radio resource on the basis of a current radio resource of the terminal" indication, TBF information, and carrier information. When the terminal receives the downlink data through only one TBF, the TBF information is omissible. In this case, the carrier is modified in the current TBF of the terminal by default.

Mode 4: If the network needs to add a radio resource of the terminal and the parameter information is delivered through the dual-carrier assignment branch of a downlink assignment message, the need of adding a radio resource of the terminal may be indicated by setting the mandatory items "TIMESLOT_ALLOCATION_C1" and "TIMESLOT_ALLOCATION_C2" in the dual-carrier assignment branch to be optional and carrying either "TIMESLOT_ALLOCATION_C1" or "TIMESLOT_ALLOCATION_C2" in the dual-carrier assignment branch in an embodiment of the present invention. In the embodiment of the present invention, it is also appropriate that the dual-carrier assignment branch carries a "removing or modifying a radio resource on the basis of a current radio resource of the terminal" indication to instruct the terminal to regulate the radio resource, which is not detailed further.

In the modes mentioned above, the current radio resource of the terminal may be a single-carrier radio resource, dual-carrier radio resource, or multi-carrier radio resource.

If the current radio resource of the terminal is a single-carrier radio resource, the network may deliver the parameter information in the following mode 5:

Mode 5: If the network needs to add a radio resource of the terminal and the parameter information is delivered through the single-carrier assignment branch of a downlink assignment message, the parameter information may include: a "modifying a radio resource on the basis of a current radio resource of the terminal" indication, TBF information, and carrier information. If the TBF information is omitted, the carrier is added to the current TBF of the terminal by default. The carrier information includes the carrier ID. The current radio resource of the terminal is a single-carrier radio resource, and the single-carrier radio resource generally has no carrier ID. Therefore, in order to add a radio resource for the terminal successfully in mode 5, the carrier ID of the current carrier of the terminal should be "carrier 1" by default. The carrier ID of the current carrier may also be other default values. In this way, the carrier ID different from the foregoing default carrier ID of the current carrier in the parameter information may indicate the carrier to be added.

In mode 5, the scenario of the terminal setting the default carrier ID of the current single-carrier radio resource to "carrier 1" may be: without downlink radio resources, the terminal receives a downlink assignment message, which is intended to assign a downlink single-carrier radio resource and carries no carrier ID information. In this case, the terminal sets the carrier ID to "carrier 1" by default. The foregoing default scenario may also be: with downlink dual-carrier or multi-carrier resources, the terminal receives a downlink assignment message, which is intended to remove a downlink radio resource of the terminal and change the downlink radio resource of the terminal to a single-carrier radio resource without a carrier ID. In this case, the terminal sets the carrier ID to "carrier 1" by default.

After receiving the "regulating radio resources on the basis of a current radio resource of the terminal" parameter information, the terminal needs to determine the current radio resource first. Afterward, according to the received parameter information, the terminal adds, removes or modifies radio resources on the basis of the current radio resource.

The mode of the terminal adding a radio resource may be: when determining that the TBF in the parameter information is the same as the TBF of the current radio resource, adding a carrier onto the TBF of the current radio resource by using the carrier information in the parameter information; when determining that the TBF in the parameter information is different from the TBF of the current radio resource, creating a TBF, and adding a carrier onto the new TBF by using the carrier information in the parameter information.

The mode of the terminal removing a radio resource may be: searching the current radio resource for the carrier corresponding to the TBF and carrier information in the parameter information, and removing the found carrier; if no carrier corresponding to the TBF and carrier information in the parameter information is found, removing no carrier. If the current radio resource of the terminal is a single-carrier radio resource, the parameter information may carry no carrier information or TBF information. In this case, after receiving the "removing a radio resource on the basis of a current radio resource of the terminal" indication, the terminal may remove the current single-carrier radio resource directly.

The mode of the terminal modifying a radio resource may be: searching the current radio resource for the carrier corresponding to the TBF and the carrier information to be modified in the parameter information, and modifying the found carrier according to the modification content in the parameter information; if no carrier corresponding to the TBF and the carrier information to be modified in the parameter information is found, modifying no carrier. If the current radio resource of the terminal is a single-carrier radio resource, the parameter information may carry no TBF information or carrier information to be modified. In this case, after receiving the "modifying a radio resource on the basis of a current radio resource of the terminal" indication, the terminal may modify the current single-carrier radio resource directly according to the modification content in the parameter information.

Taking the process of adding a radio resource of the terminal as an example, the method for regulating radio resources in an embodiment of the present invention is described below with reference to accompanying drawings.

Figure 2 is a flowchart of a method for adding a downlink single-carrier radio resource of a terminal as a downlink dual-carrier radio resource in an embodiment of the present invention.

As shown in Figure 2, in step 1, when the BSS needs to send data to the terminal, the BSS assigns several timeslots on a carrier to the terminal to constitute a single-carrier downlink TBF, that is, the BSS assigns a downlink single-carrier radio resource to the terminal and allocates a single-carrier TBF to the terminal. According to the timeslot assigned by the BSS, the terminal receives data and enters the packet transmission state.

In step 2, in the downlink TBF transmission process, due to the change of the idle state of the radio resource or the change of quality of service required by the upper layer, the BSS extends the radio resource of the downlink TBF for the terminal, for example, by allocating a new timeslot to the TBF on another carrier.

In step 3, the BSS assigns the new radio resource on another carrier of the downlink TBF to the terminal through a downlink assignment message, and transmits data on the new radio timeslot.

In step 4, after receiving the downlink assignment message, the terminal adds a carrier on the basis of the current single-carrier radio resource according to the parameter information in the downlink assignment message so that the terminal receives downlink data through a dual-carrier radio resource.

In step 3, the BSS may assign the new radio resource on another carrier of the downlink TBF to the terminal through a downlink assignment message in one of the following three methods:

Method 1: Adding a radio resource for the terminal through the single-carrier assignment branch of the downlink assignment message.

An "Assignment Type" message field in the single-carrier assignment branch indicates adding a radio resource of another carrier for the terminal. This downlink assignment message does not change the radio resource already assigned to the current TBF; the value of "Assignment Type" here may be "10".

If method 1 is used to deliver the downlink assignment message in step 3, the specific process in step 4 is: The terminal receives the downlink assignment message, and knows that the BSS requires adding of a radio resource if the terminal determines that the value of "Assignment Type" in the single-carrier assignment branch of the downlink assignment message is "10". The terminal judges whether the TBF in the downlink assignment message is the same as an existent TBF. If so, the terminal adds a radio resource onto the existent TFB according to the carrier information in the downlink assignment message. In this way, the existent TBF of the terminal may receive data blocks on the radio resource of the two carriers; if the TBF in the downlink assignment message is different from the existent TBF, the terminal creates a TBF according to the TBF in the downlink assignment message, and assigns a carrier to the new TBF according to the carrier information in the downlink assignment message. The new TBF uses only the radio resource on the newly assigned carrier to receive data blocks, and the existent TBF of the terminal still uses the radio resource on the old carrier to receive data blocks.

Method 2: Adding a radio resource for the terminal through the dual-carrier assignment branch of the downlink assignment message.

In the prior art, the dual-carrier assignment branch of the downlink assignment message includes two timeslot allocation units, namely, TIMESLOT_ALLOCATION_C1 and TIMESLOT_ALLOCATION_C2, which are used to describe the two carriers of the downlink dual-carrier radio resource of the terminal. In the prior art, the two timeslot allocation units are mandatory, and the BSS uses the downlink assignment message that carries the two timeslot allocation units to allocate radio resources to the terminal. In an embodiment of the present invention, the foregoing two timeslot allocation units are set to be optional, and the downlink assignment message may carry either of the timeslot allocation units. The BSS carries the radio resource to be added in the optional timeslot allocation unit, and sends it to the terminal. For example, if the current radio resource of the terminal is a single-carrier radio resource and the BSS needs to add a new resource for the terminal so as to regulate the single-carrier radio resource of the terminal to a dual-carrier radio resource, the BSS may carry no TIMESLOT_ALLOCATION_C1 in the dual-carrier assignment branch of the downlink assignment message. Instead, the dual-carrier assignment branch carries TIMESLOT_ALLOCATION_C2 only, indicating that the assignment of the radio resource intends to add another carrier resource for the existent TBF.

If the current radio resource of the terminal is a dual-carrier radio resource or multi-carrier radio resource, the BSS may still use the foregoing method 2 to add radio resources for the terminal. Moreover, the BSS may use method 2 to remove or modify the current radio resource of the terminal. For example, if the current radio resource of the terminal is a dual-carrier radio resource and the BSS needs to modify the existing dual-carrier radio resource of the terminal to keep the dual-carrier radio resource of the terminal, the BSS may carry no TIMESLOT_ALLOCATION_C1 in the dual-carrier assignment branch of the downlink assignment message. Instead, the dual-carrier assignment branch carries TIMESLOT_ALLOCATION_C2 only, indicating that the assignment of the radio resource intends to modify carrier 2 of the current TBF of the terminal. Therefore, the downlink assignment message imposes no impact on carrier 1 of the current TBF of the terminal. The process of removing the current radio resource of the terminal is similar to the process described above, and is not detailed further.

If method 2 is used to deliver the downlink assignment message in step 3, the specific process in step 4 is: The terminal receives the downlink assignment message, and knows that the BSS requires adding of a radio resource if the terminal determines that the dual-carrier assignment branch of the downlink assignment message carries only one timeslot allocation unit. The terminal judges whether the TBF in the downlink assignment message is the same as an existent TBF. If so, the terminal adds a radio resource onto the existent TFB according to the carrier information in the downlink assignment message. In this way, the existent TBF of the terminal may receive data blocks on the radio resource of the two carriers; if the TBF in the downlink assignment message is different from the existent TBF, the terminal creates a TBF according to the TBF in the downlink assignment message, and assigns a carrier to the new TBF according to the carrier information in the downlink assignment message. The new TBF uses only the radio resource on the newly assigned carrier to receive data blocks, and the existent TBF of the terminal still uses the radio resource on the old carrier to receive data blocks.

Through two optional timeslot allocation units, a carrier radio resource may be added for the single-carrier TBF flexibly and an existing carrier resource in the dual-carrier TBF may be modified and removed flexibly.

Method 3: Adding a radio resource for the terminal through the single-carrier assignment branch of the downlink assignment message.

In this method, the current radio resource of the terminal is a single-carrier radio resource. In the prior art, the carrier of the single-carrier radio resource of the terminal has no carrier ID. In the embodiment of the present invention, the terminal sets the ID of the current single carrier of the terminal to "carrier 1" by default. When delivering the single-carrier assignment branch of the downlink assignment message, the BSS may set "Assignment Type" to "01", indicating the need of modifying the current radio resource of the terminal; meanwhile, the carrier ID in the single-carrier assignment branch may be set to "1" (supposing "0" represents carrier 1 and "1" represents carrier 2), indicating that the radio resource to be modified is "carrier 2". After receiving the foregoing downlink assignment message, the terminal knows that the BSS needs to add network sources for the terminal according to the "Assignment Type" whose value is "01" and the carrier ID whose value is "1", and therefore, adds carrier 2 onto the current TBF.

In method 3, the current radio resource of the terminal may also be a dual-carrier or multi-carrier radio resource. In this case, the terminal stores the ID of each carrier. If the terminal determines that the "Assignment Type" in the single-carrier assignment branch of the downlink assignment message delivered by the BSS is "01" and the ID of each carrier stored in the terminal is different from the carrier ID in the single-carrier assignment branch, the terminal knows that the BSS needs to add network resources for the terminal, and therefore, adds a carrier onto the current TBF.

An apparatus for regulating radio resources of a terminal is provided in an embodiment of the present invention. The apparatus may be a BSS. The apparatus includes a parameter information setting module and a sending module.

The parameter information setting module is adapted to set "regulating radio resources of the terminal on the basis of a current radio resource of the terminal" parameter information when the radio resources of the terminal need to be regulated on the basis of the current radio resource of the terminal. The parameter information setting module may set parameter information in the five application scenarios in the foregoing embodiments, and may set the parameter information in a single-carrier assignment branch or dual-carrier assignment branch of a downlink assignment message. The parameter information setting module uses the single-carrier assignment branch and dual-carrier assignment branch to set parameter information in any of the five modes in the foregoing embodiments, the details of which are not described further.

The sending module sends the parameter information set by the parameter information setting module to the terminal. The message sent by the sending module may be: a downlink assignment message that carries parameter information in the single-carrier assignment branch, or a downlink assignment message that carries parameter information in the dual-carrier assignment branch. The parameter information sent by the sending module enables the terminal to regulate radio resources on the basis of the current radio resource according to the received parameter information.

A terminal device provided in an embodiment of the present invention includes a judging module and a regulating module.

The judging module is adapted to: judge whether the message received by the terminal carries "regulating radio resources of the terminal on the basis of a current radio resource of the terminal" parameter information, and notify the regulating module after determining that the message received by the terminal carries such parameter information. For example, the judging module notifies the regulating module when determining that the "Assignment Type" message field in the single-carrier assignment branch of the downlink assignment message is "10"; the judging module notifies the regulating module when determining that the dual-carrier assignment branch of the downlink assignment message carries only one timeslot allocation unit. The network delivers the foregoing parameter information in different ways. Therefore, the judgment process of the judging module varies, as described in the foregoing embodiments.

The regulating module is adapted to: determine the current radio resource of the terminal after receiving the notification of the judging module, and regulate the radio resource of the terminal on the basis of the current radio resource of the terminal according to the parameter information received by the terminal. The regulation includes: adding radio resources incrementally, removing radio resources of the terminal, and modifying the current radio resource of the terminal. An example of adding radio resources incrementally is: on the basis of the current single-carrier radio resource of the terminal, adding a carrier so that the radio resource of the terminal is regulated from a single-carrier radio resource to a dual-carrier radio resource; another example is: on the basis of the current single-carrier radio resource of the terminal, adding multiple carriers so that the radio resource of the terminal is regulated from a single-carrier radio resource to a multi-carrier radio resource, as detailed in the foregoing embodiments of the method.

As described in the foregoing embodiments, the embodiments of the present invention enable regulating of radio resources of the terminal on the basis of the current radio resource of the terminal when the terminal is in the packet transmission state. Therefore, the network only needs to deliver the parameters of the newly added radio resources or the removed radio resources, and can assign and extend radio resources incrementally for the terminal, and remove or modify the radio resources flexibly, thus reducing the extent of changing radio resources of the terminal and improving the flexibility of regulating radio resources of the terminal.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for regulating radio resources of a terminal, comprising:
transmitting"regulating radio resources of the terminal on the basis of a current radio resource of the terminal" parameter information to the terminal; and
by the terminal, determining the current radio resource after receiving the parameter information, and regulating radio resources on the basis of the current radio resource according to the parameter information; wherein
the regulating of radio resources on the basis of the current radio resource comprises: maintaining the current radio resource and adding a radio resource; or maintaining a part of the current radio resource and releasing a remaining part of the current radio resource.

2. The method of claim 1, wherein the process of maintaining the current radio resource and adding a radio resource comprises:
adding, by the terminal, a carrier onto a Temporary Block Flow, TBF, according to carrier information in the parameter information if the TBF in the parameter information is the same as an existent TBF in the terminal; and
creating a TBF according to the TBF in the parameter information if the TBF in the parameter information is different from an existent TBF in the terminal, and adding a carrier onto the new TBF according to the carrier information in the parameter information.

3. The method of claim 1 or 2, wherein the transmitting of "regulating radio resources of the terminal on the basis of a current radio resource of the terminal" parameter information to the terminal comprises:
carrying the parameter information in a single-carrier assignment branch or dual-carrier assignment branch of a downlink assignment message and transmitting it to the terminal.

4. The method of claim 1 or 2, wherein:
the parameter information comprises: a "regulating radio resources of the terminal on the basis of a current radio resource of the terminal" indication; and
the process of the terminal determining the current radio resource after receiving the parameter information and regulating radio resources on the basis of the current radio resource according to the parameter information comprises:
by the terminal, determining the current radio resource if an "Assignment Type" message field in a single-carrier assignment branch of the downlink assignment message received by the terminal carries the indication, and adding or removing a radio resource on the basis of the current radio resource.

5. The method of claim 1 or 2, wherein: the process of the terminal determining the current radio resource after receiving the parameter information and regulating radio resources on the basis of the current radio resource according to the parameter information comprises:
by the terminal, determining the current radio resource if a dual-carrier assignment branch in the downlink assignment message received by the terminal carries a timeslot allocation unit, and adding a radio resource on the basis of the current radio resource.

6. The method of claim 1 or 2, wherein the terminal stores a carrier ID of the current radio resource, and the process of the terminal determining the current radio resource after receiving the parameter information, and regulating radio resources on the basis of the current radio resource according to the parameter information comprises:
by the terminal, determining the current radio resource if a single-carrier assignment branch in the downlink assignment message received by the terminal carries a indication for modifying ID and the carrier ID carried in the single-carrier assignment branch is different from the carrier ID stored in the terminal, and adding a radio resource on the basis of the current radio resource.

7. A method for regulating radio resources of a terminal, comprising:
carrying an "adding a radio resource on the basis of a current radio resource of the terminal" indication in an "Assignment Type" message field of a single-carrier assignment branch of a downlink assignment message, and transmitting the downlink assignment message to the terminal; and
by the terminal, determining the current radio resource if the "Assignment Type" message field of the downlink assignment message received by the terminal carries the indication, and adding a radio resource on the basis of the current radio resource according to the downlink assignment message.

8. A method for regulating radio resources of a terminal, comprising:
transmitting a downlink assignment message to the terminal, wherein the message indicates that a dual-carrier assignment branch carries a timeslot allocation unit; and
by the terminal, determining a current radio resource if the dual-carrier assignment branch in the downlink assignment message received by the terminal carries a timeslot allocation unit, and adding a radio resource on the basis of the current radio resource according to the downlink assignment message.

9. A method for regulating radio resources of a terminal, wherein if a current radio resource of the terminal is a single-carrier radio resource, a carrier ID of the radio resource on the terminal is "carrier n" by default, n comprising 1; and the method comprises:
transmitting a downlink assignment message to the terminal, wherein the message indicates that a single-carrier assignment branch carries an indication for modifying ID; and
adding, by the terminal, a radio resource on the basis of the current radio resource according to the downlink assignment message if the single-carrier assignment branch in the downlink assignment message received by the terminal carries the indication for modifying ID and the carrier ID carried in the single-carrier assignment branch is different from a default carrier ID.

10. A method for regulating radio resources of a terminal, wherein the method comprises:
receiving, by the terminal, "regulating radio resources of the terminal on the basis of a current radio resource of the terminal" parameter information from a network; and
by the terminal, determining the current radio resource after receiving the parameter information, and regulating radio resources on the basis of the current radio resource according to the parameter information;
the regulating of radio resources on the basis of the current radio resource comprises: maintaining the current radio resource and adding a radio resource; or maintaining a part of the current radio resource and releasing a remaining part of the current radio resource.

11. A method for regulating radio resources of a terminal, wherein if a current radio resource of the terminal is a single-carrier radio resource, a carrier ID of the radio resource on the terminal is "carrier n" by default, n comprising 1; and the method comprises:
receiving, by the terminal, a downlink assignment message from a network; and
adding, by the terminal, a radio resource on the basis of the current radio resource according to the downlink assignment message if a single-carrier assignment branch in the downlink assignment message received by the terminal carries an indication for modifying ID and the carrier ID carried in the single-carrier assignment branch is different from a default carrier ID.

12. An apparatus for regulating radio resources of a terminal, comprising:
a parameter information setting module, adapted to set "adding or removing radio resources of the terminal on the basis of a current radio resource of the terminal" parameter information when the radio resources of the terminal need to be regulated on the basis of the current radio resource of the terminal; and
a sending module, adapted to send the parameter information set by the parameter information setting module to the terminal.

13. The apparatus of claim 12, wherein: the parameter information setting module carries the set parameter information in a single-carrier assignment branch or dual-carrier assignment branch of a downlink assignment message, and the sending module sends the downlink assignment message to the terminal.

14. A terminal device, comprising:
a judging module, adapted to send a notification to a regulating module after determining that the terminal receives "adding or removing radio resources of the terminal on the basis of a current radio resource of the terminal" parameter information; and
the regulating module, adapted to: determine the current radio resource of the terminal after receiving the notification, and add or remove radio resources of the terminal on the basis of the current radio resource according to the received parameter information.
